# EUROPÄISCHE PATENTSCHRIFT

(11) **EP 3 516 259 B1**
(45) Veröffentlichungstag und Bekanntmachung des Hinweises auf die Patenterteilung: **22.03.2023**
(21) Anmeldenummer: 17768443.8
(22) Anmeldetag: 15.09.2017
(51) Int. Cl.: F16D 66/00, B60T 13/66, B60T 17/08, B60T 17/22

(54) **PNEUMATISCHE SCHEIBENBREMSE**
PNEUMATIC DISK BRAKE
FREIN À DISQUE PNEUMATIQUE

(30) Priorität: 19.09.2016 DE 102016117593
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: FUCHS, Alexander, 81677 München (DE); STAAHL, Christian, 81929 München (DE); THEIL, Robert, 82299 Türkenfeld (DE); WERTH, Alexander, 80999 München (DE); BLESSING, Michael, 80687 München (DE)
(86) Internationale Anmeldenummer: PCT/EP2017/073256
(87) Internationale Veröffentlichungsnummer: WO 2018/050810

(56) Entgegenhaltungen:
- EP-A2- 1 418 362
- WO-A1-98/26968
- US-A1- 2004 251 090
- US-A1- 2015 068 851

## Beschreibung

Die vorliegende Erfindung betrifft eine pneumatische Scheibenbremse für ein Nutzfahrzeug gemäß dem Oberbegriff des Anspruchs 1 sowie ein Verfahren zur Zustandsüberwachung einer pneumatischen Scheibenbremse.

Aus dem Stand der Technik ist es bekannt, dass bei druckluftbetätigten Scheibenbremsen eine Bremsanforderung durch einen Nutzer/Fahrer in ein Drucksignal umgewandelt wird, welches an einem Bremszylinder der Scheibenbremse anliegt. Entsprechend diesem am Bremszylinder anliegenden Druck wird der Bremszylinder betätigt, wobei ein Zylinderstößel des Bremszylinders proportional zum Bremsdruck gegen den Bremshebel der Scheibenbremse bewegt wird. Der Bremshebel drückt dabei auf ein Druckstück, mit dem die Bremsbeläge gegen die Bremsscheibe gedrückt und dadurch das Kraftfahrzeug abgebremst wird.

Zur Regelung der Scheibenbremse ist es beispielsweise aus der DE 10 2010 032 515 A1 bekannt, den Hebelhub des Bremshebels als Eingangsgröße für einen Belagverschleißsensor einzusetzen.

Des Weiteren ist es bekannt, auf Prüfständen für solche Scheibenbremsen unterschiedliche Messsysteme zur Bestimmung des Hebelhubs des Bremshebels einzusetzen, bei denen Seilzüge, Lasertriangulation, Wirbelstrom, Dehnungsmessstreifen, induktive oder kapazitive Sensoren eingesetzt werden.

Aus der US 2015/0068851 A1 ist eine pneumatische Scheibenbremse mit einem Sensorelement in Gestalt eines zur Aufnahme eines Sensors geeigneten ringförmigen Gehäuses bekannt, das zwischen einer Unterseite eines Bremszylindergehäuses und dem Bremssattel luftdicht montiert ist. Dieser Ring weist einen Inspektionsport in Gestalt eines radialen Durchlasses auf. In diesen Inspektionsport wird zur Überprüfung der Dichtigkeit eines Raumes innerhalb eines am Zylinderstößel und an der Unterseite eines Bremszylindergehäuses angebrachten Balges, der sich durch das Sensorelement bis in den Bremssattel erstreckt, ein Drucksensor eingesetzt und anschließend der oben genannte Innenraum mit Überdruck oder Unterdruck beaufschlagt.

Aus der WO 98/26968 A1 ist eine Scheibenbremse mit einem Bremszylinder und einem mit diesem einstückig ausgebildeten Bremssattel bekannt, bei der ein Drucksensor in einem Innenraum des Bremssattels befestigt ist.

All diesen Messsystemen ist gemeinsam, dass sie für den Einsatz in Versuchsfahrzeugen im Feldtest oder für einen Serieneinsatz ungeeignet sind.

Aufgabe der vorliegenden Erfindung ist es, eine Scheibenbremse der gattungsgemäßen Art mit einer verbesserten Bremsregelung bereitzustellen.

Weitere Aufgabe der Erfindung ist es, ein Verfahren zur Zustandsüberwachung einer pneumatischen Scheibenbremse bereitzustellen, mit dem eine verbesserte Regelung der Scheibenbremse erfolgen kann.

Diese Aufgabe wird durch eine pneumatische Scheibenbremse mit den Merkmalen des Anspruchs 1 sowie durch eine pneumatische Scheibenbremse mit den Merkmalen des Anspruchs 10 gelöst.

Die zweite Aufgabe wird durch ein Verfahren zur Zustandsüberwachung einer pneumatischen Scheibenbremse mit den Merkmalen des Anspruchs 12 gelöst.

Beide erfindungsgemäße pneumatische Scheibenbremsen für ein Nutzfahrzeug weisen einen eine Bremsscheibe übergreifenden Bremssattel auf, einen mit dem Bremssattel luftdicht verbundenen pneumatischen Bremszylinder. Ein in einem Sattelinnenraum des Bremssattels angeordneter Bremshebel ist dabei von einem in einem Stößelraum des Bremszylinders angeordneten Stößel aus einer Nichtbremsstellung in eine Bremsstellung bewegbar. In einem luftdichten Druckraum der Scheibenbremsen, deren Volumen sich proportional zu einer Hubbewegung des Stößels verändert, ist ein mit einer ersten Schnittstelle einer Auswerteeinheit verbundener, einem sich mit der Hubbewegung des Stößels beim Bremsvorgang verändernden Druck überwachender Drucksensor angeordnet.

Bei der Scheibenbremse gemäß Anspruch 1 ist der Druckraum durch den Stößelraum gebildet, wobei der Stößelraum durch eine luftdichte Trenneinrichtung von dem Zylinderinnenraum und dem Sattelinnenraum des Bremssattels getrennt ausgebildet ist.

Bei der alternativ ausgebildeten Scheibenbremse gemäß Anspruch 10 ist der Druckraum als separater Kolbenraum ausgebildet, wobei ein das Volumen des Kolbenraums verändernder Kolben in Wirkverbindung mit dem Stößel oder einem durch den Stößel angetriebenes Bauteil der Scheibenbremse steht, wobei der Druck in dem Kolbenraum sich mit einer Verfahrbewegung des Kolbens verändert.

Der Einsatz eines solchen Drucksensors in der Scheibenbremse ermöglicht die Überwachung des sich mit der Hubbewegung des Stößels beim Bremsvorgang verändernden Druckes, wobei aus dieser Druckänderung die Hubbewegung des Stößels bestimmt werden kann, da die Druckänderung proportional zur linearen Bewegung des Stößels ist.

Ein solcher Drucksensor kann an einer einfach zugänglichen Stelle der Scheibenbremse, insbesondere überall im Sattelinnenraum oder Stößelraum beliebig angebracht werden, da sich der Druck in dem betrachteten luftdichten Druckraum in gleicher Weise verändert. Wählt man einen Anbringungsort entfernt von der Bremsscheibe und den Bremsbelägen, ermöglicht dies den Einsatz eines vergleichsweise günstigen Sensors, da durch die Entfernung von der Bremsscheibe und den Bremsbelägen der Drucksensor keinen allzu hohen Umgebungstemperaturen ausgesetzt ist.

Der Drucksensor kann z.B. auf bereits vorhandenen Platinen von Sensoren, wie beispielsweise einem Verschleißpotentiometer aufgebracht werden.

Weiterhin kann der Drucksensor bevorzugt dort platziert werden, wo ausreichend Raum zur Verfügung steht, insbesondere nicht unmittelbar in der Nähe sich bewegender Bauteile der Scheibenbremse wie Bremshebel oder Brücke.

Das erfindungsgemäße Verfahren zur Zustandsüberwachung einer pneumatischen Scheibenbremse, insbesondere für ein Nutzfahrzeug, zeichnet sich dadurch aus, dass ein in einen luftdichten Druckraum der Scheibenbremse, dessen Volumen sich proportional zu einer Hubbewegung des Stößels eines pneumatischen Bremszylinders verändert, angeordneter Drucksensor eine durch Bewegung des Stößels bei einem Bremsvorgang hervorgerufene Druckänderung im Druckraum erfasst wird, wobei an einer mit dem Drucksensor verbundenen Auswerteeinheit aus der erfassten Druckveränderung der Hub des Stößels des Bremszylinders ermittelt wird. Dadurch kann durch eine einfache Druckmessung eine Vielzahl weiterer Folgegrößen in einfacher Weise berechnet werden.

Vorteilhafte Ausführungsvarianten der Erfindung sind Gegenstand der Unteransprüche.

Gemäß einer vorteilhaften Ausführungsvariante der Erfindung weist die Auswerteeinheit wenigstens eine weitere Schnittstelle zur Erfassung wenigstens eines weiteren Signals auf. Diese weitere Schnittstelle dient dabei insbesondere dem Anschluss eines in dem Druckraum angeordneten Temperatursensors.

Mithilfe eines solchen Temperatursensors ist es ermöglicht, die Temperatur in dem betrachteten Druckraum zu erfassen, um ein temperaturkompensiertes Drucksignal zu erhalten. Die Temperaturänderung in dem betrachteten Druckraum führt ebenfalls zu einer Druckänderung in dem betrachteten Druckraum.

Dieser Temperatursensor kann dabei in einer bevorzugten Ausführungsvariante als separates Bauteil ausgeführt sein. Denkbar ist auch, einen solchen Temperatursensor in einen Drucksensor zu integrieren.

Gemäß einer weiteren vorteilhaften Ausführungsvariante ist der Drucksensor als Baueinheit mit einem Temperatursensor, der Auswerteeinheit und einer Übertragungseinheit ausgebildet ist. Die Übertragungseinheit ist dabei bevorzugt als drahtlose Übertragungseinheit ausgebildet.

Dadurch ist ermöglicht, das vom Drucksensor erfasste Signal kabellos weiterzuleiten, was den Vorteil hat, dass Kabel zu den Bremsen sowie Dichtungen und spezielle Stecker, die definierten IP-Schutzklassen gegen Umgebungsbedingungen wie Feuchtigkeit etc. genügen müssen, eingespart werden können.

Durch die drahtlose Übertragung des vom Drucksensor erfassten Signals entfällt außerdem die Notwendigkeit, eine zusätzliche Öffnung für den Drucksensor in der Bremse zu erzeugen und diese abzudichten.

Ein weiterer Vorteil der kabellosen Übermittlung des Signals des Drucksensors besteht darin, dass eine Vielzahl von Fahrzeug- und/oder Trailerbremsen über den gleichen Empfänger auf einfache Art und Weise sowie mit geringem Aufwand und kostengünstig, insbesondere durch Einsparung der Kabel und Stecker, überwacht werden können.

Bei der mit Anspruch 1 beanspruchten Ausführungsvariante, bei der der Druckraum durch den Stößelraum selbst gebildet wird, wobei der Stößelraum durch eine luftdichte Trenneinrichtung von dem Zylinderinnenraum und dem Sattelinnenraum des Bremssattels getrennt ausgebildet ist, ist der Drucksensor im Stößelraum befestigt. Die Trenneinrichtung selber ist bevorzugt als Balg, insbesondere als Faltenbalg oder auch als Kolben ausgebildet.

Gemäß der mit Anspruch 10 beanspruchten Ausführungsvariante, bei der der Druckraum als separater Kolbenraum ausgebildet ist, wobei ein das Volumen des Kolbenraums verändernder Kolben in Wirkverbindung mit dem Stößel oder einem durch den Stößel angetriebenes Bauteil der Scheibenbremse steht, wobei der Druck in dem Kolbenraum sich mit einer Verfahrbewegung des Kolbens verändert, wird bevorzugt eine separate Bohrung im Gehäuse des Bremssattels eingebracht, was es ermöglicht, den Volumenunterschied des Druckraum zwischen einer Nichtbremsstellung und einer Bremsstellung durch eine kleine Bemaßung des Druckraums und/oder eine große Hubbewegung des Kolbens möglichst groß zu gestalten, da dadurch auch die Druckänderung bei gleichem Hub des Stößels 8 größer ist und somit eine feinere Auflösung des Hubs ermöglicht.

Gemäß einer besonderen Ausführungsvariante des erfindungsgemäßen Verfahrens wird neben der Druckveränderung wenigstens ein weiteres Signal erfasst, das bei der Auswertung der Druckwerte berücksichtigt wird. So wird insbesondere die Temperatur im Druckraum erfasst, die in die Berechnung des Hubs des Stößels des Bremszylinders einfließt.

Als weiteres bei der Auswertung der Druckwerte berücksichtigtes Signal ist es denkbar, beispielsweise ein Betätigungssignal, ausgelöst durch den Fahrer oder das elektronische Bremssystem oder einen Druck zur Ansteuerung des Bremszylinders oder die über ein GPS ermittelte geographische Höhe zu berücksichtigen.

In einer weiteren besonderen Ausführungsvariante des erfindungsgemäßen Verfahrens wird in der Auswerteeinheit eine Änderung des Gradienten des im Druckraum gemessenen Druckes ermittelt. Dies ermöglicht die Bestimmung von Größen wie den Ansprechdruck der Scheibenbremse, der Hysterese, des Lüftspiels bzw. des Verschleißzustandes der Bremsbeläge und der Bremsscheibe.

Besonders bevorzugt werden in der Auswerteeinheit aus der Gradientenänderung der Stößelhub und/oder ein Lüftspiel und/oder ein Bremsbelagverschleiß eines oder mehrerer Bremsbeläge der Scheibenbremse ermittelt.

Des Weiteren wird bevorzugt unter Berücksichtigung des Lüftspiels in der Auswerteeinheit eine Zuspannkraft der Scheibenbremse ermittelt.

Des Weiteren wird in einer bevorzugten Ausführungsvariante unter Berücksichtigung des ermittelten Lüftspiels sowie vorbekannter physikalischer Parameter der Bremsscheibe und der Bremsbeläge ein Bremsmoment der Scheibenbremse ermittelt.

Nachfolgend werden bevorzugte Ausführungsbeispiele anhand der beiliegenden Zeichnungen näher erläutert. Es zeigen:
- Fig. 1: eine schematische Schnittdarstellung einer Ausführungsvariante einer erfindungsgemäßen Scheibenbremse,
- Fig. 2 und 3: Seitenschnittansichten eines Teilausschnitts der Scheibenbremse mit darin angeordnetem Drucksensor,
- Fig. 4: eine schematische Seitenschnittansicht eines Teilausschnitts der Scheibenbremse mit darin angeordnetem Drucksensor in alternativer Bauweise, und
- Fig. 5: eine schematische Blockansicht einer an einen Drucksensor angeschlossenen Auswerteeinheit mit mehreren Schnittstellen.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, des Bremssattels, des Sattelinnenraums, der Stößel, des Stößelraums, des Bremshebels, der Auswerteeinheit und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

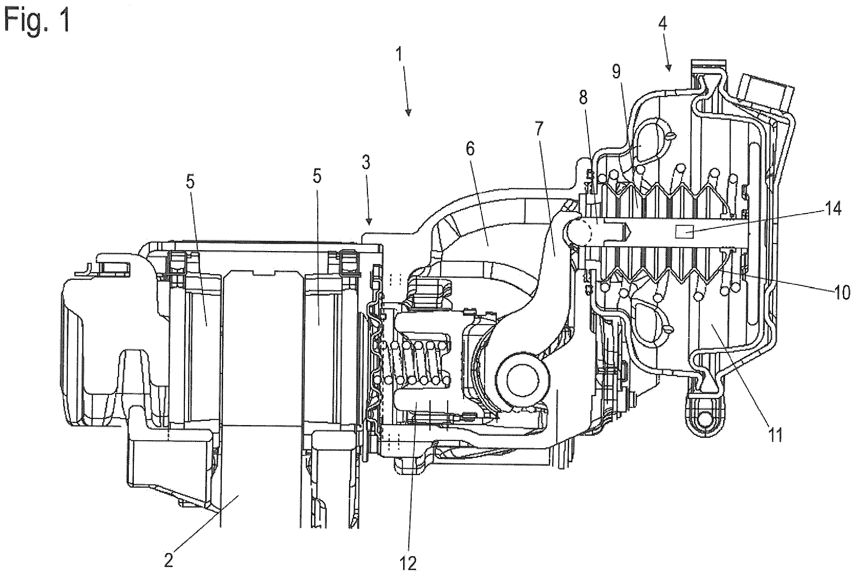

In Fig. 1 ist mit dem Bezugszeichen 1 insgesamt eine Ausführungsvariante einer erfindungsgemäßen pneumatischen Scheibenbremse bezeichnet. Die Scheibenbremse 1 weist eine Bremsscheibe 2 auf, die von einem Bremssattel 3 überspannt wird. In dem Bremssattel 3 in einem zuspannseitigen Sattelinnenraum 6 ein Bremshebel 7 gelagert, der mit einer Brücke 12 in Wirkverbindung steht und bei einem Bremsvorgang die Brücke 12 über eines oder mehrere Druckstücke gegen einen zuspannseitigen Bremsbelag 5 drückt.

Die Bewegung des Bremshebels 7 wird durch einen Stößel 8 eines luftdicht mit dem Bremssattel 3 verbundenen pneumatischen Bremszylinders 4 bewirkt. Der Stößel 8 wird durch Druckbeaufschlagung des Bremszylinders 4 aus einer in Fig. 1 dargestellten Nichtbremsstellung in eine Bremsstellung bewegt. Die Bewegung des Stößels 8 erfolgt dabei als lineare Bewegung. Der Stößel 8 ist dabei in bekannter Bauweise durch eine hier als Faltenbalg ausgebildete luftdichte Trenneinrichtung 10 von einem Zylinderinnenraum 11 getrennt.

Zur Zustandsüberwachung der Scheibenbremse 1 ist, wie in Fig. 1 ferner zu erkennen ist, in einen luftdichten Druckraum der Scheibenbremse 1, dessen Volumen sich proportional zu einer Hubbewegung des Stößels 8 verändert, ein Drucksensor 14 angeordnet.

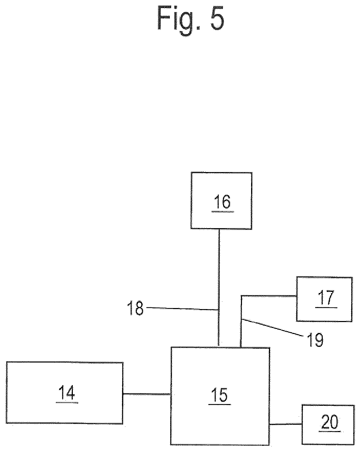

Dieser Drucksensor 14 ist dabei, wie in **Fig. 5** schematisch dargestellt, mit einer ersten Schnittstelle einer Auswerteeinheit 15 verbunden, in der aus der erfassten Druckveränderung der Hub des Stößels 8 des Bremszylinders 4 ermittelt wird.

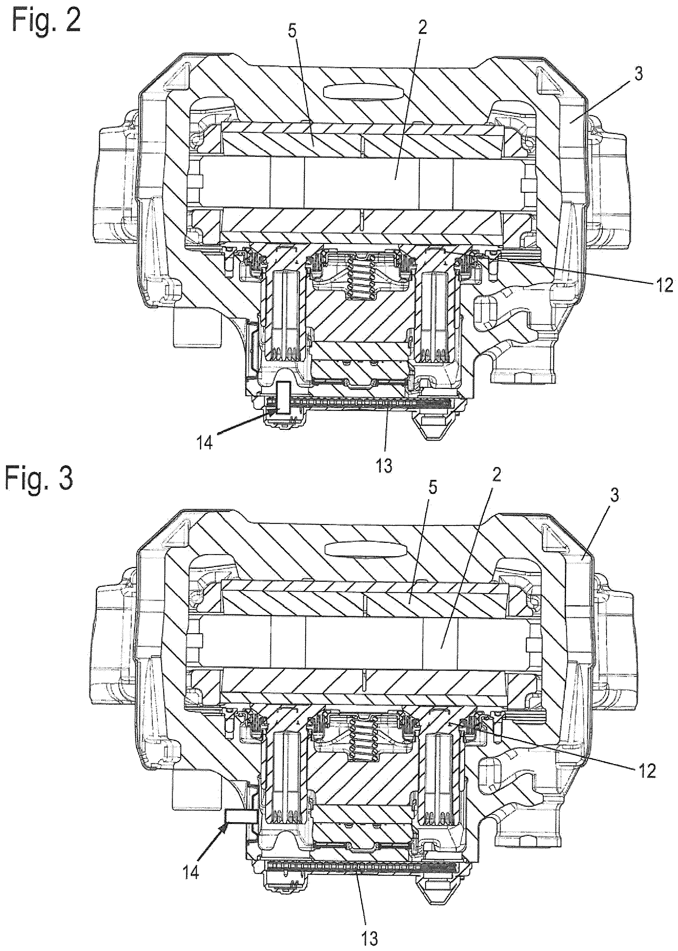

Während der Drucksensor 14 in der in Fig. 1 gezeigten Ausführungsvariante am Stößel 8 angeordnet ist, ist es ebenso denkbar, den Drucksensor 14 an einem anderen Ort innerhalb des Stößelraumes 9 anzuordnen oder auch, wie es in den **Fig. 2 und 3** beispielhaft dargestellt ist, im Sattelinnenraum 6 des Bremssattels 3.

Der Druckraum, in dem der Drucksensor 14 angeordnet ist, wird in einer Ausführungsvariante der Scheibenbremse 1 durch den Stößelraum 9 und durch den Sattelinnenraum 6 des Bremssattels 3 gebildet, wobei der Stößelraum 9 durch eine luftdichte Trenneinrichtung 10 von einem Zylinderinnenraum 11 getrennt ausgebildet ist.

Die Trenneinrichtung 10 ist bevorzugt als Balg, insbesondere als Faltenbalg ausgebildet, wie es in weiter oben bereits anhand der in Fig. 1 beschriebenen Ausführungsvariante beschrieben wurde. Denkbar ist auch, die Trenneinrichtung 10 als Kolben auszubilden.

Denkbar ist es auch, dass der Druckraum ausschließlich durch den Stößelraum 9 gebildet ist. Der Stößelraum 9 ist dabei durch eine entsprechend ausgebildete luftdichte Trenneinrichtung 10 von dem Zylinderinnenraum 11 und dem Sattelinnenraum 6 des Bremssattels 3 getrennt ausgebildet. Der Stößel 8 ist in diesem Fall in einer den Stößelraum 9 mit dem Sattelinnenraum 6 verbindenden Aufnahmeöffnung aufgenommen, wobei der Stößel 8 den Stößelraum 9 vom Sattelinnenraum 6 sowohl in der Bremsstellung als auch in der Nichtbremsstellung luftdicht verschließt.

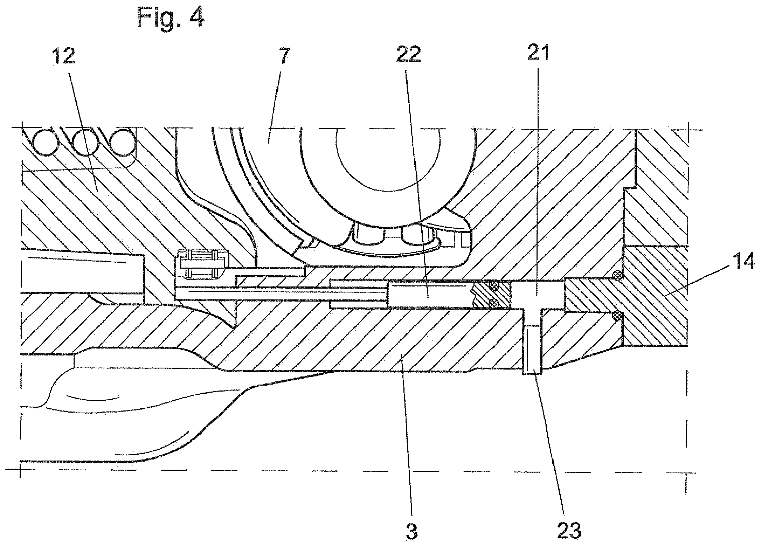

Um verschiedene physikalische Einflüsse auf eine Druckveränderung im Druckraum der Scheibenbremse 1 zu berücksichtigen, die nicht durch die Hubbewegung des Stößels 8 verursacht werden, weist die Auswerteeinheit 15 wenigstens eine weitere Schnittstelle 18, 19 zur Erfassung wenigstens eines weiteren Signals auf, wie es in Fig. 4 dargestellt ist.

Insbesondere ist in den Druckraum ein mit der Auswerteeinheit 15 verbundener Temperatursensor 16 angeordnet. Dieser Temperatursensor 16 dient dabei der Erfassung einer Temperaturänderung im Druckraum der Scheibenbremse 1, da ein Anstieg der Temperatur im Druckraum ebenfalls zu einem Druckanstieg führt. Durch Erfassung der Temperatur im Druckraum ist es so ermöglicht, ein temperaturkompensiertes Drucksignal zu erhalten.

Der Temperatursensor 16 ist dabei nach einer Ausführungsvariante als separates Bauteil ausgebildet.

Nach einer alternativen Ausführungsvariante ist der Temperatursensor 16 als in den Drucksensor 14 integriertes Bauteil ausgebildet.

Zur Kalibrierung eines solchen Drucksignals ist es dabei ausreichend, bei einem Ausgangszustand die aktuelle Temperatur zu ermitteln und an die Auswerteeinheit 15 weiterzuleiten. Eine permanente Überwachung der Temperatur im Druckraum ist dabei nicht notwendig, da sich der im Druckraum vorherrschende Druck durch Erwärmung der im Druckraum vorhandenen Luft im Vergleich zur Druckerhöhung durch Veränderung des Volumens des Druckraums nur sehr langsam auswirkt.

In einer weiteren Ausführungsvariante ist der Drucksensor 14 als Kombisensor mit verbundenem Temperatursensor 16 oder als Drucksensor 14 mit separatem Temperatursensor 16 zusammen mit einer Auswerteeinheit 15 und einer Übertragungseinheit 20 ausgebildet, welcher im Sattelinnenraum 6 angeordnet ist und das Signal drahtlos, insbesondere durch Funk oder durch eine Schnittstelle auf Basis von Radiofrequenz-Technologie aus dem Sattelinnenraum 6 an einen zentralen Empfänger im elektronischen Bremssystem übermittelt.

Diese Ausführung erweitert nochmals die Positionierungsmöglicheiten zur Anordnung des Drucksensors 14 im Sattelinnenraum oder Stößelraum. So ist beispielsweise denkbar, den Drucksensor 14 an der Innenseite einer Verschlusskappe des Bremssattels 3 anzubringen, was den Vorteil hat, dass der Drucksensor 14 als ergänzendes Ausrüstungsbauteil am Bremssattel 3 angebracht werden kann, ohne bauliche Veränderungen des Bremssattels 3 vornehmen zu müssen und ohne dass der Drucksensor 14 zusätzlichen Bauraum benötigt.

Zur Unterscheidung des Druckanstiegs durch Betätigung der Bremse von anderen Umwelteinflüssen, ist es nach einer weiteren bevorzugten Ausführungsvariante vorgesehen, eine Schnittstelle 18, 19 zur Erfassung eines weiteren Signals oder mehrerer weiterer Signale, ggfs. über weitere angschlossene Sensoren 17 vorzusehen. Dieses weitere Signal ist dabei vorzugsweise ein Bremsbetätigungssignal, ausgelöst durch den Fahrzeugführer oder ein Signal eines elektronischen Bremssystems des Fahrzeugs.

Nach einer weiteren Ausführungsvariante des Verfahrens zur Zustandsüberwachung einer solchen pneumatischen Scheibenbremse ist es vorgesehen, in der Auswerteeinheit eine Änderung des Gradienten des im Druckraum gemessenen Druckes zu ermitteln.

Die lineare Abhängigkeit des Hubs des Stößels 8 vom Druck in dem betrachteten Druckraum ist durch die Zustandsgleichung des idealen Gases begründet. Dabei wird davon ausgegangen, dass die beispielsweise als Faltenbalg ausgebildete Trenneinrichtung 10, die den betrachteten Druckraum begrenzt, durch ansteigenden Druck im Druckraum nicht aufgeweitet wird. Geht mit dem Anstieg des Innendrucks eine Aufweitung einer solchen Trenneinrichtung 10 einher und ist deren Ausdehnungsverhalten bekannt, kann dies bei der Berechnung des Stößelhubs berücksichtigt werden.

Weitere Einflussgrößen, die eine Änderung des Druckes im betrachteten Druckraum hervorrufen können, sind beispielsweise der atmosphärische Druck (wetterbedingt oder bedingt durch die geographische Höhe, in der das Nutzfahrzeug sich bewegt), eine mögliche Luftdiffusion durch die Trenneinrichtung 10 oder Undichtigkeiten des betrachteten Druckraumes.

Diese Fehlerquellen können durch Berücksichtigung der geographischen Höhe, eines empirisch ermittelten Ausdehnungsverhaltens der Trenneinrichtung 10, durch Druckvergleichsmessungen über kürzere Zeiträume, bei denen keine Abhängigkeit von dem atmosphärischen Druck oder einer Luftdiffusion berücksichtigt werden müssen oder auch durch Testbremsungen mit vorbestimmten Parametern erfolgen.

Die dabei ermittelten Daten werden über eine der weiteren Schnittstellen der Auswerteeinheit 15 zugeführt und bei der Berechnung des Stößelhubs berücksichtigt.

Bei Ausschluss von Fehlerquellen bei der Druckmessung ist es überdies auch möglich, die Lufttemperatur im betrachteten Druckraum über den Druck selber zu bestimmen. Bleibt das Volumen des betrachteten Druckraums gleich, weil nur Innendrücke bei unbetätigter Bremse betrachtet werden, so kann die Zustandsgleichung des idealen Gases pV = mRT bei bekannter Gaskonstante R des Luftgemisches im betrachteten Druckraum auf p₀/T₀ = p₁/T₁ gekürzt werden. Bei Kenntnis der Ausgangstemperatur, beispielsweise durch Messen der Außentemperatur über einen Außentemperaturfühler des Fahrzeugs beim Start nach längerer Pause sowie der anstehenden Drücke lässt sich daraus die Temperatur im Innenraum des Druckraums berechnen.

Die Schaffung eines luftdichten Druckraums, dessen Volumen sich proportional zu einer Hubbewegung des Stößels 8 verändert, kann auch durch Ausgestalten des Druckraums als separater Kolbenraum 21 erfolgen, wobei ein das Volumen des Kolbenraums 21 verändernder Kolben 22 in Wirkverbindung mit dem Stößel 8 oder einem durch den Stößel 8 angetriebenes Bauteil der Scheibenbremse steht, wobei der Druck in dem Kolbenraum 21 sich mit einer Verfahrbewegung des Kolbens 22 verändert.

Wie in **Figur 4** beispielhaft dargestellt, ist der Kolbenraum 21 als Bohrung im Gehäuse des Bremssattels 3 ausgebildet. Der Drucksensor 14 verschließt in der hier gezeigten Ausführungsvariante ein zum Außenraum offenes Ende der Bohrung, was ermöglicht, den Drucksensor 14 in einfacher Weise von außen am Bremssattel 3 anbringen zu können. Denkbar ist aber auch, den Drucksensor 14 innerhalb des Raumes 21 vor dem Kolben 22 zu platzieren und die Bohrung nach außen mit einer Dichtung wie einer Verschlusskappe oder dergleichen zu verschließen.

Der Kolben 22 ist in dem in Figur 4 gezeigten Ausführungsbeispiel an die Brücke 12 im Bremssattel 3 angekoppelt. Denkbar ist auch die Ankopplung des Kolbens 22 an ein anderes durch den Stößel 8 direkt oder indirekt angetriebenes Bauteil der Scheibenbremse.

Desweiteren ist hier im Bremssattelgehäuse eine weitere in den Raum 21 mündende Bohrung vorgesehen, in die ein Ventil 23 zur Überdruckbefüllung eingesetzt ist. Dieser im Kolbenraum 21 vorgesehene Überdruck bewirkt bei unbetätigter Bremse ein stetiges Andrücken des Kolbens 22 gegen die Brücke 12, um eine dauerhafte Ankopplung des Kolbens 22 an die Bewegung der Brücke 12und damit des Stößels 8 zu gewährleisten. Das von dem Ventil 23 nicht ausgefüllte Volumen dieser weiteren Bohrung ist dabei als Teil des Kolbenraums 21 zu betrachten.

Denkbar ist auch, den Kolben 22 mithilfe eines im Kolbenraum 21 angeordneten Federelements (nicht gezeigt) dauerhaft gegen die Brücke 12 zu drücken.

Vorteilhaft ist es hier, als Druckraum einen Raum zu nutzen oder zu schaffen, dessen Volumenänderung zwischen einer Nichtbremsstellung und einer Bremsstellung möglichst groß ist, da dadurch auch die Druckänderung bei gleichem Hub des Stößels 8 größer ist und somit eine feinere Auflösung des Hubs ermöglicht ist. Dies kann bei der in Figur 4 gezeigten Ausführungsvariante durch eine entsprechend kleine Bemaßung des Kolbenraums 21 und/oder einem großen Hub des Kolbens 22 verwirklicht werden.

Bei einer weiteren besonderen Ausführungsvariante wird anstelle der Druckveränderung eine Änderung des Gradienten des Druckes im Druckraum ausgewertet. Dadurch ist ermöglicht, die Größen Ansprechdruck, Hysterese, Lüftspiel und Verschleißzustand der Bremsbeläge und der Bremsscheibe zu bestimmen.

In einer besonderen Variante wird zur Bestimmung des Lüftspiels der Scheibenbremse der Bremszylinder 4 so weit mit Druck beaufschlagt, dass die Bremsbeläge 5 an der Bremsscheibe 2 anliegen, jedoch keine Bremskraft bzw. kein Bremsmoment erzeugt wird. Dadurch kann aus dem über die Druckänderung in dem Druckraum bestimmten Hub des Stößels 8 und damit auch des Bremshebels 7 auf das Lüftspiel geschlossen werden.

Unter Berücksichtigung des Lüftspiels kann in einer weiteren Ausführungsvariante des Verfahrens eine Zuspannkraft der Scheibenbremse 1 ermittelt werden. Dazu wird über eine der weiteren Schnittstellen 18, 19 der Auswerteeinheit 15 eine Information über ein voreingestelltes Lüftspiel der Scheibenbremse 1 eingegeben.

Unter Verwendung der Zuspannkraft ist es des Weiteren möglich, das Bremsmoment zu ermitteln. Dazu ist des Weiteren notwendig, in der Auswerteeinheit Informationen über die eingebauten Bremsbeläge und/oder die eingesetzte Bremsscheibe und/oder die Reibpaarung von Bremsbelag und Bremsscheibe zur Verfügung zu stellen.

### Bezugszeichenliste

- 1: Scheibenbremse
- 2: Bremsscheibe
- 3: Bremssattel
- 4: Bremszylinder
- 5: Bremsbelag
- 6: Sattelinnenraum
- 7: Bremshebel
- 8: Stößel
- 9: Stößelraum
- 10: Trenneinrichtung
- 11: Zylinderinnenraum
- 12: Brücke
- 13: Nachstelleinrichtung
- 14: Drucksensor
- 15: Auswerteeinheit
- 16: Temperatursensor
- 17: Sensor
- 18: Schnittstelle
- 19: Schnittstelle
- 20: Übertragungseinheit
- 21: Kolbenraum
- 22: Kolben
- 23: Ventil

## Patentansprüche

1. Pneumatische Scheibenbremse (1) für ein Nutzfahrzeug, aufweisend
- einen eine Bremsscheibe (2) übergreifenden Bremssattel (3),
- einen mit dem Bremssattel (3) luftdicht verbundenen pneumatischen Bremszylinder (4),
- wobei ein in einem Sattelinnenraum (6) des Bremssattels (3) angeordneter Bremshebel (7) von einem in einem Stößelraum (9) des Bremszylinders (4) angeordneten Stößel (8) aus einer Nichtbremsstellung in eine Bremsstellung bewegbar ist,
- wobei in einem luftdichten Druckraum der Scheibenbremse (1), dessen Volumen sich proportional zu einer Hubbewegung des Stößels (8) verändert, ein mit einer ersten Schnittstelle einer Auswerteeinheit (15) verbundener, einem sich mit der Hubbewegung des Stößels beim Bremsvorgang verändernden Druck überwachender Drucksensor (14) angeordnet ist,
**dadurch gekennzeichnet, dass**
- der Druckraum durch den Stößelraum (9) gebildet ist, wobei der Stößelraum (9) durch eine luftdichte Trenneinrichtung (10) von dem Zylinderinnenraum (11) und dem Sattelinnenraum (6) des Bremssattels (3) getrennt ausgebildet ist.

2. Scheibenbremse nach Anspruch 1, **dadurch gekennzeichnet, dass** die Auswerteeinheit (15) wenigstens eine weitere Schnittstelle (18, 19) zur Erfassung wenigstens eines weiteren Signals aufweist.

3. Scheibenbremse nach Anspruch 2, **dadurch gekennzeichnet, dass** in dem Druckraum ein mit der Auswerteeinheit (15) verbundener Temperatursensor (16) angeordnet ist.

4. Scheibenbremse nach Anspruch 3, **dadurch gekennzeichnet, dass** der Temperatursensor (16) als separates Bauteil oder als in den Drucksensor (14) integriertes Bauteil ausgebildet ist.

5. Scheibenbremse nach Anspruch 2, **dadurch gekennzeichnet, dass** der Drucksensor (14) als Baueinheit mit einem Temperatursensor (16), der
Auswerteeinheit (15) und einer Übertragungseinheit (20) ausgebildet ist.

6. Scheibenbremse nach einem der Ansprüche 2 bis 6, **dadurch gekennzeichnet, dass** ein weiteres in der Auswerteeinheit (15) erfasstes Signal ein Bremsbetätigungssignal ist.

7. Scheibenbremse nach einem der vorhergehenden Ansprüche, **dadurch gekennzeichnet, dass** der Drucksensor (14) im Stößelraum (9) befestigt ist.

8. Scheibenbremse nach einem der vorhergehenden Ansprüche, **dadurch gekennzeichnet, dass** die Trenneinrichtung (10) als Balg, insbesondere als Faltenbalg ausgebildet ist.

9. Scheibenbremse nach einem der vorhergehenden Ansprüche 1 bis 8, **dadurch gekennzeichnet, dass** die Trenneinrichtung (10) als Kolben ausgebildet ist.

10. Scheibenbremse nach dem Oberbegriff des Anspruchs 1, **dadurch gekennzeichnet, dass** der Druckraum als separater Kolbenraum (21) ausgebildet ist, wobei ein das Volumen des Kolbenraums (21) verändernder Kolben (22) in Wirkverbindung mit dem Stößel (8) oder einem durch den Stößel (8) angetriebenes Bauteil der Scheibenbremse steht, wobei der Druck in dem Kolbenraum (21) sich mit einer Verfahrbewegung des Kolbens (22) verändert.

11. Scheibenbremse nach Anspruch 10, **dadurch gekennzeichnet, dass** der Kolbenraum (21) als Bohrung im Gehäuse des Bremssattels (3) ausgebildet ist, wobei der Drucksensor (14) in der Bohrung angeordnet ist oder diese verschließt und wobei der Kolben (22) an eine Brücke (12) im Bremssattel (3) angekoppelt ist.

12. Verfahren zur Zustandsüberwachung einer pneumatische Scheibenbremse (1) gemäß einem der vorstehenden Ansprüche, insbesondere für ein Nutzfahrzeug, bei dem ein in einem luftdichten Druckraum der Scheibenbremse (1), dessen Volumen sich proportional zu einer Hubbewegung eines Stößels (8) eines pneumatischen Bremszylinders (4) verändert, angeordneter Drucksensor (14) eine durch Bewegung des Stößels (8) bei einem Bremsvorgang hervorgerufene Druckänderung im Druckraum erfasst wird, wobei in einer mit dem Drucksensor (14) verbundenen Auswerteeinheit (15) aus der erfassten Druckveränderung der Hub des Stößels (8) des Bremszylinders (4) ermittelt wird.

13. Verfahren nach Anspruch 12, **dadurch gekennzeichnet, dass** neben der Druckveränderung wenigstens ein weiteres Signal erfasst wird, das bei der Auswertung der Druckwerte berücksichtigt wird.

14. Verfahren nach Anspruch 13, **dadurch gekennzeichnet, dass** neben der Druckveränderung die Temperatur im Druckraum erfasst wird, wobei die Temperatur im Druckraum bei der Berechnung des Hubs des Stößels (8) des Bremszylinders (4) berücksichtigt wird.

15. Verfahren nach einem der Ansprüche 12 bis 14, **dadurch gekennzeichnet, dass** in der Auswerteeinheit (15) eine Änderung des Gradienten des im Druckraum gemessenen Druckes ermittelt wird.

16. Verfahren nach Anspruch 15, **dadurch gekennzeichnet, dass** in der Auswerteeinheit (15) aus der Gradientenänderung der Stößelhub und/oder ein Lüftspiel und/oder ein Belagverschleiß eines oder mehrerer Brembeläge (5) der Scheibenbremse (1) ermittelt wird.

17. Verfahren nach Anspruch 16, **dadurch gekennzeichnet, dass** in der Auswerteeinheit (15) unter Berücksichtigung des Lüftspiels eine Zuspannkraft der Scheibenbremse (1) ermittelt wird.

18. Verfahren nach Anspruch 16 oder 17, **dadurch gekennzeichnet, dass** in der Auswerteeinheit (15) unter Berücksichtigung des ermittelten Lüftspiels und vorbekannten physikalischen Parametern der Bremsscheibe (2) und der Bremsbeläge (5) ein Bremsmoment der Scheibenbremse (1) ermittelt wird.

## Claims

1. A pneumatic disc brake (1) for a utility vehicle, comprising:
- a brake calliper (3) that fits over a brake disc (2);
- a pneumatic brake cylinder (4) that is connected in an airtight manner to the brake calliper;
- it being possible to move a brake lever (7) that is arranged in a calliper interior (6) of the brake calliper (3) from a non-braking position into a braking position by means of a tappet (8) that is arranged in a tappet chamber (9) of the brake cylinder (4);
- there being arranged in an airtight pressure chamber of the disc brake (1), the volume of this pressure chamber changing proportionally to a stroke movement of the tappet (8), a pressure sensor (14) that is connected to a first interface of an evaluation unit (15) and monitors a pressure that changes with the stroke movement of the tappet during braking;
**characterised in that**
- the pressure chamber takes the form of the tappet chamber (9), this tappet chamber (9) being separated from the cylinder interior (11) and the calliper interior (6) of the brake calliper (3) by an airtight separating device (10).

2. A disc brake according to claim 1, **characterised in that** the evaluation unit (15) has at least one further interface (18, 19) for detecting at least one further signal.

3. A disc brake according to claim 2, **characterised in that** arranged in the pressure chamber is a temperature sensor (16) that is connected to the evaluation unit (15).

4. A disc brake according to claim 3, **characterised in that** the temperature sensor (16) is configured either as a separate component or as a component integrated in the pressure sensor (14).

5. A disc brake according to claim 2, **characterised in that** the pressure sensor (14) is configured as a module comprising a temperature sensor (16), the evaluation unit (15) and a transmission unit (20).

6. A disc brake according to any one of claims 2 to 6, **characterised in that** a further signal detected in the evaluation unit (15) is a brake actuation signal.

7. A disc brake according to any one of the preceding claims, **characterised in that** the pressure sensor (14) is fixed in the tappet chamber (9).

8. A disc brake according to any one of the preceding claims, **characterised in that** the separating device (10) is configured as a bellows, in particular as a folding bellows.

9. A disc brake according to any one of the preceding claims 1 to 8, **characterised in that** the separating device (10) is configured as a piston.

10. A disc brake according to the preamble of claim 1, **characterised in that** the pressure chamber is configured as a separate piston chamber (21), a piston that changes the volume of the piston chamber (21) being operatively connected either to the tappet (8) or to a component of the disc brake that is driven by the tappet (8), the pressure in the piston chamber (21) changing with the travel movement of the piston (22).

11. A disc brake according to claim 10, **characterised in that** the piston chamber (21) is configured as a bore in the housing of the brake calliper (3), the pressure sensor (14) being arranged in or closing this bore and the piston (22) being coupled to a bridge (12) in the brake calliper (3).

12. A method for monitoring the state of a pneumatic disc brake (1) according to any one of the preceding claims, in particular for a utility vehicle, in which a pressure sensor (14) that is arranged in an airtight pressure chamber of the disc brake (1), the volume of this pressure chamber changing proportionally to a stroke movement of a tappet (8) of a pneumatic brake cylinder (4), detects a pressure change in the pressure chamber caused by the movement of the tappet (8) during braking, the stroke of the tappet (8) of the brake cylinder (4) being determined in an evaluation unit (15) connected to the pressure sensor (14) from the detected pressure change.

13. A method according to claim 12, **characterised in that** in addition to the pressure change, at least one further signal is detected and taken into account in evaluating the pressure values.

14. A method according to claim 13, **characterised in that** in addition to the pressure change, the temperature in the pressure chamber is also detected, the temperature in the pressure chamber being taken into account in calculating the stroke of the tappet (8) of the brake cylinder (4).

15. A method according to any one of claims 12 to 14, **characterised in that** a change in the gradient of the pressure measured in the pressure chamber is determined in the evaluation unit (15).

16. A method according to claim 15, **characterised in that** the tappet stroke and/or the clearance and/or the pad wear of one or more brake pads (5) of the disc brake (1) is/are determined in the evaluation unit (15).

17. A method according to claim 16, **characterised in that** an application force of the disc brake (1) is determined in the evaluation unit (15) taking into account the clearance.

18. A method according to claim 16 or 17, **characterised in that** a braking torque of the disc brake (1) is determined in the evaluation unit (15) taking into account the clearance determined and previously known physical parameters of the brake disc (2) and the brake pads (5).

## Revendications

1. Frein (1) à disque pneumatique d'un véhicule utilitaire, comportant
- un étrier (3) de frein chevauchant un disque (2) de frein,
- un cylindre (4) de frein pneumatique relié d'une manière étanche à l'air à l'étrier (3) de frein,
- dans lequel un levier (7) de frein, disposé dans un espace (6) intérieur de l'étrier (3) de frein, peut, par un poussoir (8) monté dans un espace (9) de poussoir du cylindre (4) de frein, se déplacer d'une position de non freinage à une position de freinage,
- dans lequel, dans un espace de pression étanche à l'air du frein (1) à disque, dont le volume se modifie proportionnellement à une course du poussoir (8), est disposé un capteur (14) de pression relié à une première interface d'une unité (15) d'analyse et contrôlant une pression se modifiant avec la course du piston lors d'une opération de freinage,
**caractérisé en ce que**
- l'espace de pression est formé par l'espace (9) de poussoir, dans lequel l'espace (9) de poussoir est constitué par un dispositif (10) de séparation étanche à l'air distinct de l'espace (11) intérieur du cylindre et de l'espace (6) intérieur de l'étrier (3) de frein.

2. Frein à disque suivant la revendication 1, **caractérisé en ce que** l'unité (15) d'analyse a au moins une autre interface (18, 19) de détection d'au moins un autre signal.

3. Frein à disque suivant la revendication 2, **caractérisé en ce que** dans l'espace de pression est disposée une sonde (16) de température reliée à l'unité (15) d'analyse.

4. Frein à disque suivant la revendication 3, **caractérisé en ce que** la sonde (16) de température est constituée sous la forme d'une pièce distincte ou d'une pièce intégrée dans le capteur (14) de pression.

5. Frein à disque suivant la revendication 2, **caractérisé en ce que** le capteur (14) de pression est constitué sous la forme d'une unité de construction avec la sonde (16) de température, l'unité (15) d'analyse et une unité (20) de transmission.

6. Frein à disque suivant l'une des revendications 2 à 6, **caractérisé en ce qu'**un autre signal détecté dans l'unité (15) d'analyse est un signal d'actionnement du frein.

7. Frein à disque suivant l'une des revendications précédentes, **caractérisé en ce que** le capteur (14) de pression est fixé dans l'espace (9) de poussoir.

8. Frein à disque suivant l'une des revendications précédentes, **caractérisé en ce que** le dispositif (10) de séparation est constitué sous la forme d'un soufflet, notamment d'un soufflet à plis.

9. Frein à disque suivant l'une des revendications 1 à 8 précédentes, **caractérisé en ce que** le dispositif (10) de séparation est constitué sous la forme d'un piston.

10. Frein à disque suivant le préambule de la revendication 1, **caractérisé en ce que** l'espace de pression est constitué sous la forme d'un espace (21) de piston distinct, dans lequel un piston (22), modifiant le volume de l'espace (21) de piston, est en liaison d'action avec le poussoir (8) ou avec une pièce du frein à disque entraînée par le poussoir (8), la pression dans l'espace (21) de piston se modifiant avec un mouvement de déplacement du piston (22).

11. Frein à disque suivant la revendication 10, **caractérisé en ce que** l'espace (21) de piston est constitué sous la forme d'un trou dans le corps de l'étrier (3) de frein, dans lequel le capteur (14) de pression est disposé dans le trou ou le ferme, et dans lequel le piston (22) est accouplé à un pontet (12) de l'étrier (3) de frein.

12. Procédé de contrôle de l'état d'un frein (1) à disque pneumatique suivant l'une des revendications précédentes, notamment d'un véhicule utilitaire, dans lequel un capteur (14) de pression, disposé dans un espace de pression étanche à l'air du frein (1) à disque, dont le volume se modifie proportionnellement à une course d'un poussoir (8) d'un cylindre (4) de frein pneumatique, détecte dans l'espace de pression une variation de pression provoquée par le déplacement du poussoir (8) lors d'une opération de freinage, dans lequel, dans une unité (15) d'analyse reliée au capteur (14) de pression, on détermine la course du poussoir (8) du cylindre (4) de frein, à partir de la variation de pression, qui est détectée.

13. Procédé suivant la revendication 12, **caractérisé en ce que,** outre la variation de pression, on détecte au moins un autre signal, que l'on prend en compte lors de l'analyse des valeurs de pression.

14. Procédé suivant la revendication 13, **caractérisé en ce que,** outre la variation de pression, on détecte la température dans l'espace de pression, dans lequel on prend en compte la température dans l'espace de pression, lors du calcul de la course du poussoir (8) du cylindre (4) de frein.

15. Procédé suivant l'une des revendications 12 à 14, **caractérisé en ce que** l'on détermine, dans l'unité (15) d'analyse, une variation du gradient de la pression mesurée dans l'espace de pression.

16. Procédé suivant la revendication 15, **caractérisé en ce que** l'on détermine, dans l'unité (15) d'analyse, à partir de la variation du gradient, la course du poussoir et/ou un jeu de garnitures et/ou une usure d'une ou plusieurs garnitures (5) de frein du frein (1) à disque.

17. Procédé suivant la revendication 16, **caractérisé en ce que,** dans l'unité (15) d'analyse, on détermine, en tenant compte du jeu de garnitures, une force de serrage du frein (1) à disque.

18. Procédé suivant la revendication 16 ou 17, **caractérisé en ce que,** dans l'unité (15) d'analyse, on détermine, en tenant compte du jeu de garnitures déterminé et de paramètres physiques connus à l'avance du disque (2) de frein et des garnitures (5) de frein, un couple de freinage du frein (1) à disque.
